**Europäisches Patentamt**

**European Patent Office**

**Office européen des brevets**

(11) Veröffentlichungsnummer: **0 118 032**
**A2**

(12) ## EUROPÄISCHE PATENTANMELDUNG

(21) Anmeldenummer: **84101049.9**

(22) Anmeldetag: **02.02.84**

(51) Int. Cl.³: **G 09 B 19/02**
**G 09 B 1/06**

(30) Priorität: **03.02.83 DE 3303695**

(43) Veröffentlichungstag der Anmeldung:
**12.09.84 Patentblatt 84/37**

(84) Benannte Vertragsstaaten:
**AT BE CH FR GB IT LI LU NL SE**

(71) Anmelder: **Haase, Peter**
**Breslauer Str. 10**
**D-3508 Melsungen(DE)**

(72) Erfinder: **Haase, Peter**
**Breslauer Str. 10**
**D-3508 Melsungen(DE)**

(74) Vertreter: **Freiherr von Schorlemer, Reinfried**
**Brüder-Grimm-Platz 4**
**D-3500 Kassel(DE)**

(54) **Vorrichtung zur Darstellung des Zahlenaufbaus und der Mächtigkeit von Mengen.**

(57) Vorrichtung zur Darstellung des Zahlenaufbaus und der Mächtigkeit von Mengen, mit einer Mehrzahl von Standflächen, Seitenflächen und Deckflächen aufweisenden Bausteinen, deren Seitenflächen mit komplementären, zum seitlichen Koppeln der Bausteine bestimmten Koppelelementen versehen sind und deren Stand- und Deckflächen ggf. komplementäre, zum vertikalen Koppeln der Bausteine bestimmte Steckelemente aufweisen, und ggf.mit einer Steckplatte, die zum Aufstecken der Bausteine bestimmte, zu den Steckelementen der Standflächen der Bausteine komplementäre Steckelemente besitzt, wobei die Koppelelemente (16 bis 20) aus den Elementen von senkrecht zu den Standflächen der Bausteine (4,21 bis 25) fügbaren, parallel zu den Standflächen formschlüssigen Nut/Feder-Verbindungen bestehen (Figur 2)..

Fig 2

EP 0 118 032 A2

Die Erfindung betrifft eine Vorrichtung der im Oberbegriff des Anspruchs 1 definierten Gattung.

Vorrichtungen dieser Art dienen dem Zweck, den Zahlenaufbau im Dezimalsystem optisch und/oder taktil zu veranschaulichen. Durch horizontales lineares oder nach Art der Bornschen Zahlendarstellung horizontales flächiges Aneinanderkoppeln werden Mengen bildende, aus einzelnen Bausteinen zusammengesetzte Blöcke gebildet, deren Mächtigkeit sowohl mit den Augen als auch bei geschlossenen Augen und bei Blindheit mit dem Tastsinn abgezählt bzw. abgetastet werden kann. Die Grundrechenoperationen lassen sich durch Aneinanderfügen einer Mehrzahl vorbereiteter Ausgangsblöcke oder durch Abtrennen von Teilblöcken von einem Ausgangsblock realisieren. In entsprechender Weise können Mengen oder Rechenoperationen durch Aufeinanderstecken von Bausteinen veranschaulicht werden.

Vorrichtungen der eingangs bezeichneten Gattung sind für den genannten Zweck zwar geeignet, jedoch mit verschiedenen Gebrauchsnachteilen behaftet. So ist es beispielsweise nicht ohne weiteres möglich, einen auf die Steckplatte gesteckten Ausgangsblock durch Hinzufügung oder Wegnahme von Bausteinen zu vergrößern oder zu verkleinern, ohne vorher den gesamten Block von der Steckplatte abzunehmen, dann zu vergrößern oder zu verkleinern und danach den erhaltenen neuen Block wieder auf die Steckplatte aufzusetzen. Nachteilig ist ferner, daß die Deckflächen aller Bausteine mit identischen, allenfalls durch unterschiedliche Farben unterscheidbaren Steckelementen versehen sind, was das Abtasten bzw. Aufschlüsseln der dargestellten Mengen insbesondere bei Lernanfängern erschwert. Auch die Steckplatte der bekannten Vorrichtung ist mit identischen, in einer Vielzahl von Reihen und Spalten angeordneten Steckelementen versehen, so daß ihr keine zusätzlichen Informationen entnommen werden können. Schließlich ist es mit den bekannten Vorrichtungen nicht möglich, erarbeitete Operationen mit einem Overheadprojektor sichtbar zu machen.

Ähnliche Vorrichtungen dieser Art (DE-Gbm 71 46 092) weisen anstelle von miteinander koppelbaren Bausteinen lediglich Bausteine auf, die durch Aufstecken auf die Steckplatte zu einem Block zusammengefügt werden können. Dadurch ist es unmöglich, vorgegebene Mengen darstellende Blöcke außerhalb der Steckplatte zusammenzufügen oder als Ganzes auf die Steckplatte aufzusetzen oder von dieser abzunehmen, so daß die darzustellenden Mengen niemals als zusammenhängende, auch als Ganzes handhabbare Einheiten erscheinen. Da die einzelnen Bausteine im aufgesteckten Zustand außerdem nicht unverschiebbar und, sofern es sich um Bausteine entsprechend dem Wert "1" handelt, noch nicht einmal undrehbar auf der Steckplatte angeordnet sind, ist die Durchführung selbst einfacher Rechenoperationen recht kompliziert. Abgesehen davon weisen derartige Vorrichtungen dieselben Nachteile auf, die oben in Verbindung mit den Vorrichtungen der eingangs bezeichneten Gattung genannt wurden. Dasselbe gilt schließlich für solche Vorrichtungen, die zwar einem anderen Zweck dienen, aber auch zur Darstellung des Zahlenaufbaus im Dezimalsystem verwendet werden könnten und beispielsweise unter dem Warenzeichen "LEGO" auf dem Markt sind.

Der Erfindung liegt die Aufgabe zugrunde, die eingangs bezeichnete Vorrichtung insbesondere dahingehend zu verbessern, daß die Bausteine unabhängig davon miteinander gekoppelt oder voneinander getrennt werden können, ob sie auf der Steckplatte oder außerhalb derselben angeordnet sind. Entsprechend soll es möglich sein, bereits auf der Steckplatte angeordnete Blöcke durch Hinzufügung oder Wegnahme einzelner Bausteine oder Teilblöcke zu vergrößern oder zu verkleinern, ohne daß die zu verändernden Blöcke dazu von der Steckplatte abgenommen werden müßten.

Zur Lösung dieser Aufgabe sind die kennzeichnenden Merkmale des Anspruchs 1 vorgesehen.

Erfindungsgemäß ist die Fügerichtung senkrecht zur Standfläche der Bausteine und damit auch senkrecht zur Steckplatte.

Dadurch wird der Vorteil erzielt, daß sowohl an bereits auf der Steckplatte befindliche Bausteine oder Blöcke weitere Bausteine oder vorbereitete Blöcke angekoppelt als auch beliebige Bausteine oder Teilblöcke von der Steckplatte entfernt werden können und dabei der bereits auf der Steckplatte befindliche bzw. auf dieser verbleibende Block gesteckt bleiben kann. Durch die Formschlüssigkeit der Nut/Feder-Verbindungen parallel zu den Standflächen der Bausteine wird außerdem sichergestellt, daß miteinander gekoppelte Bausteine in dieser Richtung nicht relativ zueinander verdreht oder verschoben werden können und daher die Steckelemente der gebildeten Blöcke stets ein Raster bilden, das mit dem Raster der Steckelemente der Steckplatte übereinstimmt.

Weitere vorteilhafte Merkmale der Erfindung ergeben sich aus den Unteransprüchen.

Die Erfindung wird nachfolgend in Verbindung mit der beiliegenden Zeichnung an Ausführungsbeispielen näher erläutert. Es zeigen:

Fig. 1 eine schematische Draufsicht auf eine Steckplatte der erfindungsgemäßen Vorrichtung;

Fig. 2 einen Schnitt längs der Linie II-II der Fig. 2, wobei auf einige Steckelemente der Steckplatte Bausteine der erfindungsgemäßen Vorrichtung aufgesteckt sind;

Fig. 3 bis 8 Querschnitte durch verschiedene Ausführungsformen der Bausteine im gekoppelten Zustand; und

Fig. 9 eine Unteransicht einer weiteren Ausführungsform der Bausteine.

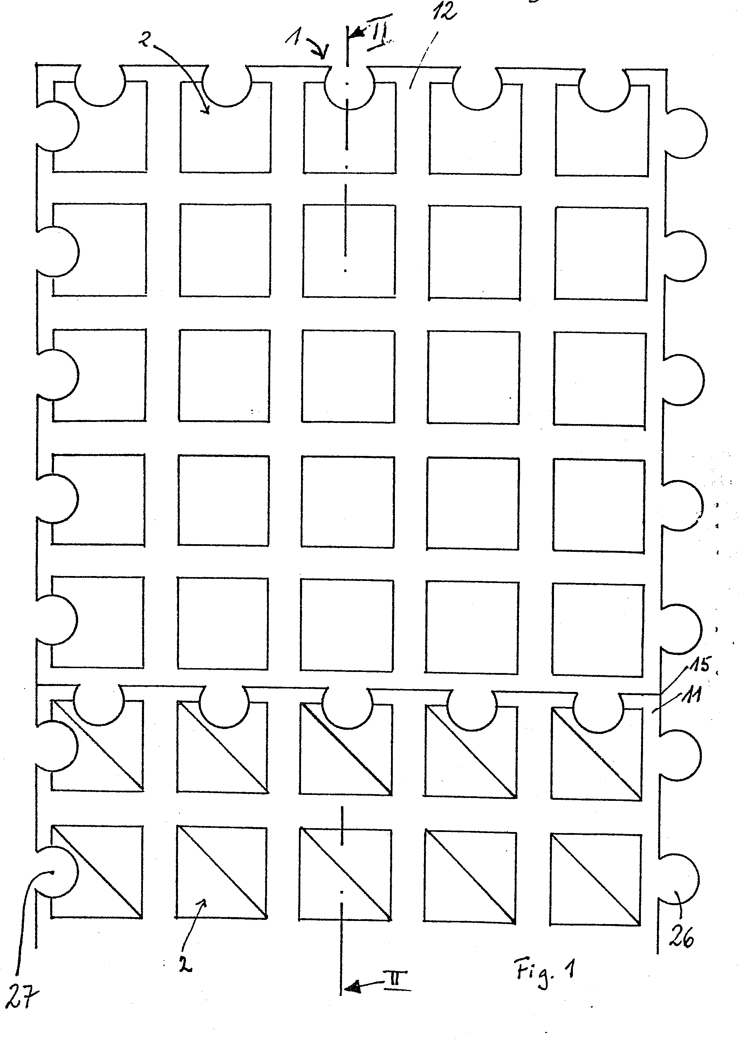

Nach Fig. 1 und 2 enthält eine Steckplatte 1 der erfindungsgemäßen Vorrichtung eine Vielzahl von Steckelementen 2, die in parallelen Reihen und dazu senkrechten Spalten angeordnet sind und deren Mittelachsen gleiche Abstände aufweisen und ein Grundraster bilden. Die Oberflächen oder Sichtflächen der Steckelemente 2 unterscheiden sich in wenigstens
einer sichtbaren oder fühlbaren Eigenschaft, beispielsweise
durch die in Fig. 1 mittels einer unterschiedlichen Schraffur angedeutete unterschiedliche Farbe. Gemäß Fig. 2 bestehen die Steckelemente 2 aus erhabenen Zapfen mit senkrecht
zur Standfläche der Steckplatte 1 verlaufenden Achsen. Zwischen diesen Zapfen sind jeweils in einer Ebene liegende
Stellflächen 3 vorgesehen.

Außer der Steckplatte 1 enthält die erfindungsgemäße Vorrichtung eine Vielzahl von Bausteinen 4, deren Standflächen mit
zu den Steckelementen 2 komplementären Steckelementen 5 in
Form von Aussparungen versehen sind. Die Form der Steckelemente 2 und der komplementären Steckelemente 5 ist dabei
zweckmäßig so gewählt, daß die Bausteine 4 im aufgesteckten
Zustand mit einem die Standfläche bildenden , das Steckelement 5 umgebenden Umfangsrand auf den Stellflächen 3 abgestützt und außerdem undrehbar und unverschieblich auf der
Steckplatte 1 angeordnet sind. Die Vielzahl der Bausteine 4
umfaßt außerdem Bausteine, die sich in wenigstens einer sichtbaren oder fühlbaren Eigenschaft unterscheiden, beispielsweise in ihrer Farbe. Außerdem kann vorgesehen sein, auf den
oberen Deckflächen der Bausteine 4 zum vertikalen Koppeln
derselben bestimmte Steckelemente 6 auszubilden, deren Um-
fangsform/mäßig genau der Form der Steckelemente 2 entspricht,
damit die Bausteine 4 wahlweise auf die Steckplatte 1 oder
die Deckfläche eines anderen Bausteins 4 aufgesteckt werden können. Außerdem ist die Grobstruktur, d.h. die zur Bildung der Steckverbindung bestimmte Form aller Steckelemente
2 bzw. 6 sowohl der Steckplatte 1 als auch der Bausteine 4
vorzugsweise im wesentlichen identisch, damit alle Bausteine
an jedem beliebigen Ort der Steckplatte angebracht werden
können.

Um auch eine taktile Unterscheidung der Steckelemente 2 und/
oder 6 zu ermöglichen, ist erfindungsgemäß vorgesehen, deren
freie Flächen mit einer unterschiedlichen Feinstruktur zu
versehen. Hierzu können die oberen Oberflächen der Steckele-

0118032

mente beispielsweise als ebene Flächen 7, als kegelförmig oder konkav ausgehöhlte Flächen 8, als konvex gewölbte Flächen 9 oder als kegelförmig, d.h. spitz zulaufende Flächen 10 ausgebildet sein. Diese Flächen 7 bis 10 ermöglichen außer der taktilen Unterscheidung natürlich auch eine optische Unterscheidung, die zu der durch unterschiedliche Farben herbeigeführten Unterscheidbarkeit hinzutreten kann.

Die Steckplatte 1 ist gemäß Fig. 1 in Felder 11 und 12 gegliedert, die jeweils gleich viele Steckelemente 2 aufweisen und durch seitliche Begrenzungen 15 sichtbar oder tastbar gegeneinander abgegrenzt sind, welche beispielsweise aus Farbstreifen oder Längs- bzw. Querrillen (Fig. 2) bestehen. Zusätzlich oder alternativ kann vorgesehen sein, den Steckelementen irgendeines Feldes 11 und 12 dieselbe Farbe oder Feinstruktur, den Steckelementen benachbarter Felder 11 und 12 dagegen eine unterschiedliche Farbe oder Feinstruktur zuzuordnen, damit sich auch hierdurch die verschiedenen Felder bzw. die zu unterschiedlichen Feldern gehörenden Steckelemente voneinander unterscheiden lassen. Die Zahl der Steckelemente pro Feld beträgt vorzugsweise 5 x 5 bzw. 10 x 10, wobei die Steckelemente in jeweils 5 bzw. 10 benachbarten Reihen und Spalten angeordnet sind.

Wie nur aus Fig. 3 bis 8 ersichtlich ist, weisen die Seitenflächen der Bausteine 4 zusätzlich komplementäre Koppelelemente 16 und 17 auf, mittels derer die Bausteine seitlich miteinander gekoppelt werden können. Die Koppelelemente 16 bestehen aus in den Seitenwänden gebildeten Nuten, während die Koppelelemente 17/aus an die Seitenflächen angeformten/ 17a oder in die Nuten einzulassenden, /Federn bestehen. separaten Die Achsen der Nuten und Federn verlaufen senkrecht zu den Standflächen der Bausteine und damit im aufgesteckten Zustand der Bausteine auch senkrecht zu den Stellflächen 3 der Steckplatte 1. Dadurch bilden die Koppelelemente 16 und 17 jeweils Nut/Feder-Verbindungen, die durch Verschiebung der Bausteine senkrecht zu deren Standflächen gefügt bzw. gelöst werden können. In den zur Achsrichtung dieser Nut/Feder-Verbindungen senkrechten Richtungen bilden die Koppelelemente 16,17 dagegen formschlüssige Verbindungen, damit ein seitliches Lösen der Verbindungen nicht möglich
ist.

Der Formschluß wird dadurch sichergestellt, daß die Nuten
mit einem Längsschlitz 18 (Fig. 3) an die Seitenflächen der
Bausteine münden, dessen Breite kleiner als der größte Querschnitt der zugehörigen Federn ist. Dies ist in Fig. 3 bis 8
für Koppelelemente 16 und 17 mit im wesentlichen kreisrunden
Querschnitten, in Fig. 9 dagegen für Koppelelemente 19 und 20
in Form von schwalbenschwanzförmigen Nuten bzw. Federn dargestellt.

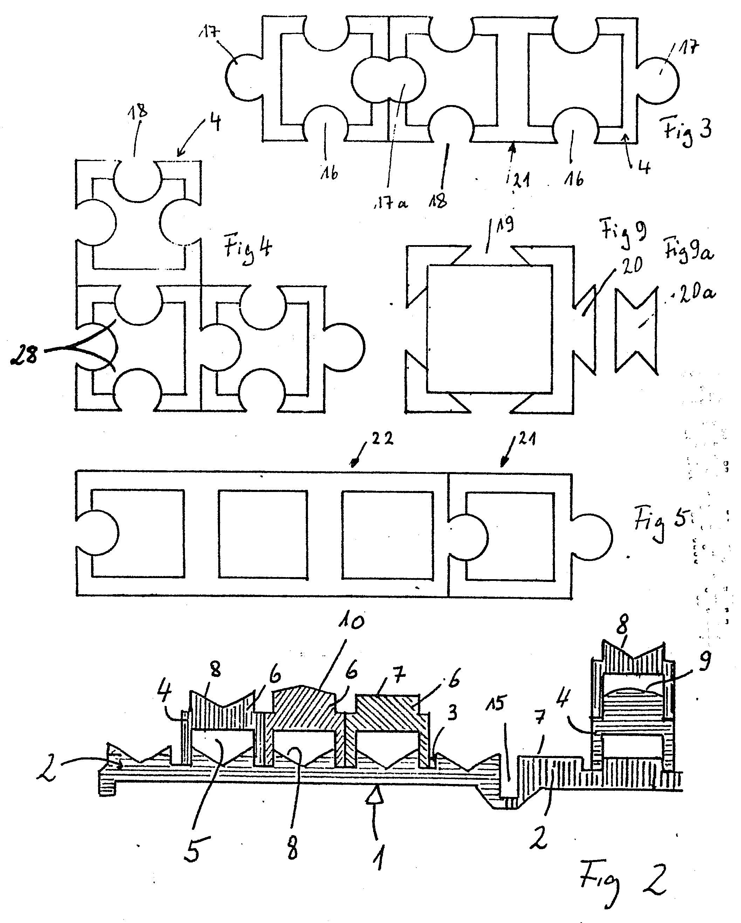

Die Bausteine 4 gemäß Fig. 3 und 4 weisen einen quadratischen
Querschnitt und an allen vier Seiten je ein Koppelelement 16
oder 17 auf, wobei wenigstens je ein Koppelelement 17 für jeden Baustein vorgesehen ist, damit die Bausteine wahlweise
linear oder in der Bornschen Anordnung (Fig. 4) miteinander
gekoppelt werden können. Gemäß Fig. 3 und 5 ist es außerdem
möglich, neben Grundbausteinen (Baustein 4), die dem Wert "1"
zugeordnet sind, Mehrfachbausteine in Form von Bausteinen 21
oder 22 vorzusehen, die dieselbe Breite und Höhe wie die Grundbausteine aufweisen, deren Länge jedoch einem ganzzahligen
Vielfachen der Länge der Grundbausteine und deren Wert daher
einem ganzzahligen Vielfachen des Wertes "1" entspricht. Ist
dabei nur eine lineare Ankopplung vorgesehen, können entsprechend Fig. 5 die langen Seiten der Bausteine frei von Koppelelementen sein. Bei Anwendung von Grundbausteinen mit quadratischen Querschnitten weisen die Mehrfachbausteine zweckmäßig
rechteckige Querschnitte und so viele Steckelemente auf, wie
beim Zusammensetzen der durch den Mehrfachbaustein repräsentierten Menge aus Grundbausteinen vorhanden wären.

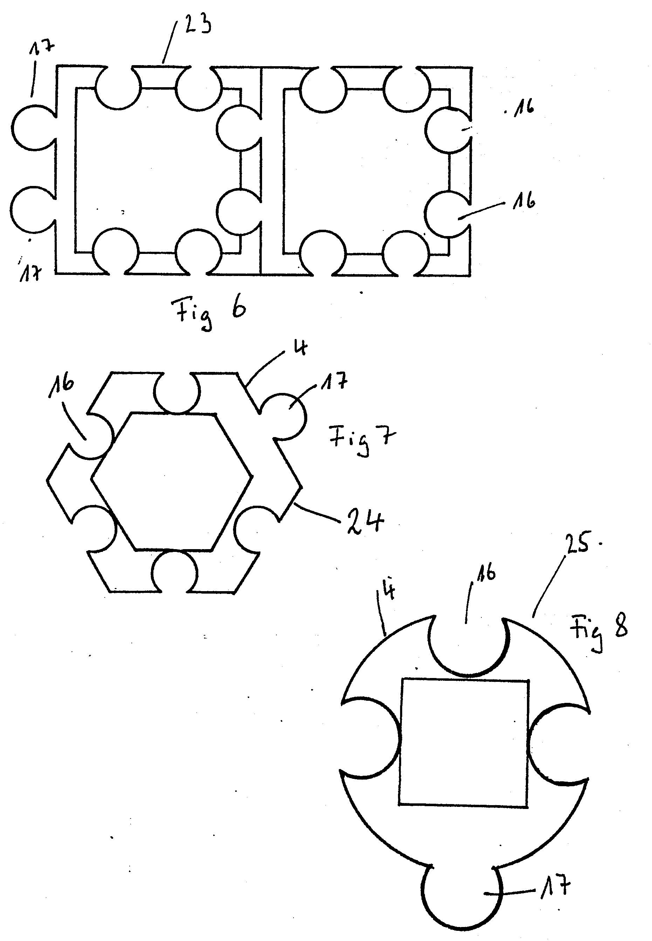

Fig. 6 bis 8 zeigen alternative Bausteine 23,24 und 25, die
sich von den Bausteinen 4 dadurch unterscheiden, daß sie entweder an jeder Seitenfläche zwei Koppelelemente 16 bzw. 17
aufweisen (Fig. 6) oder einen sechseckigen oder kreisrunden
Querschnitt (Fig. 7,8) besitzen.

Unabhängig von der äußeren Form der Bausteine sind die Koppelelemente jeweils so zu deren Mittelachsen angeordnet, daß diese Mittelachsen im gekoppelten Zustand der Bausteine ein Raster bilden, das mit dem von den Steckelementen 2 der Steckplatte 1 gebildeten Raster kompatibel ist. Bei Anwendung der Bausteine nach Fig. 3 bis 6 und 8 müssen daher im wesentlichen identische Raster vorliegen, während bei Anwendung der Bausteine 24 nach Fig. 7 der Rasterabstand der Steckplatte halb so groß wie der Rasterabstand der Bausteine sein sollte, damit alle möglichen Ankopplungen realisiert werden können. Andernfalls sind nur lineare Ankopplungen möglich.

Die Erfindung bringt zahlreiche Vorteile mit sich. Wegen der senkrecht zu den Standflächen fügbaren Nut/Feder-Verbindungen können die Bausteine sowohl außerhalb der Steckplatte zu Blöcken zusammengefügt und dann als vorgefertigte Einheit auf die Steckplatte aufgesteckt/als auch einzeln nacheinander auf diese aufgesteckt und dabei gleichzeitig miteinander gekoppelt werden. Außerdem ist die Vorrichtung entsprechend dem pädagogischen Grundsatz des Lernens mit allen Sinnen in der Weise ausgebildet, daß die zu erwerbenden Lernstrukturen sowohl mit dem Auge als auch mit dem Tastsinn erfaßt und differenzierend wahrgenommen werden können, so daß die Vorrichtung sowohl für Blinde als auch Sehende in gleicher Weise geeignet ist. Für die Darstellung der Mächtigkeit der Mengen und für das Operieren im Bereich der Grundrechnungsarten einschließlich der Operationen bei Stellenwertdarstellungen und in den Anfangsgründen der Bruchrechnung bietet die Vorrichtung folgende Möglichkeiten:

Sie erlaubt eine horizontal lineare Kopplung von Bausteinen mit nachfolgendem Abtasten der Mächtigkeit der gekoppelten Menge bei geschlossenen oder blinden Augen oder mit nachfolgendem Abzählen mit den Augen. Bei der Addition beispielsweise kann die Mächtigkeit der Ausgangsblöcke und der aus diesen neu entstandenen Blöcke sowohl einzeln als auch blockweise dadurch mit dem Tastsinn oder mit dem Auge erfaßt werden, daß zur Herstellung der Ausgangsblöcke Bausteine mit unterschiedlicher Farbe oder Feinstruktur verwendet werden.

Dies gilt sowohl bei linearer Kopplung als auch bei flächiger Kopplung nach Born und entsprechend auch bei anderen Grundrechenarten. Dabei kann mit oder ohne Steckplatte gearbeitet werden. Die beschriebene Aufgliederung der Steckplatte in Felder bestimmter Größe und Feinstruktur schafft sowohl für Sehende als auch Blinde zusätzliiche Aufgliederungshilfen bzw. Bezugsinformationen bei der Abschätzung von Mengen. Da von Lernanfängern gleichzeitig nur Mengen bis zur Mächtigkeit "3" ohne weiteres erfaßt werden können, kann durch Vergleich mit den frei bleibenden Feldern der Steckplatte leicht festgestellt werden, welche Ausgangsmengen sich beispielsweise zur Mächtigkeit "5" oder "10" usw. ergänzen. Ist wenigstens die Steckplatte aus einem transparenten Material hergestellt, erlaubt die Vorrichtung außerdem die Demonstration von erarbeiteten Operationen mit dem Overheadprojektor, wodurch die Motivation der Schüler zur Auseinandersetzung mit den Bausteinen und zum spielerischen Erlernen der Grundrechenarten erhöht wird.

Die Steckplatte und die Bausteine werden vorzugsweise aus Kunststoff im Spritzgußverfahren hergestellt. Dabei werden die Passungen der Steck- und Koppelelemente vorzugsweise so gewählt, daß einerseits die Bausteine leicht auf die Steckplatte aufgesteckt bzw. miteinander gekoppelt werden können, andererseits dennoch eine gewisse Klemmwirkung erzielt wird, um zu erreichen, daß zusammengefügte Blöcke eine als Ganzes handhabbare Einheit bilden, bzw. um zu verhindern, daß sich die Bausteine zu leicht oder sogar von selbst voneinander oder von der Steckplatte trennen lassen.

Die Erfindung ist nicht auf die beschriebenen Ausführungsbeispiele beschränkt, die sich auf vielfache Weise abwandeln lassen. Dies gilt insbesondere für die Form und die Größe der beschriebenen Steck- und Koppelelemente und die zur optischen oder taktilen Unterscheidung der Bausteine vorgeschlagenen Maßnahmen. Möglich ist beispielsweise, die Steckplatte aus mehreren, gleich großen und daher dieselbe Zahl von Steckelementen (z.B. 5 x 5) aufweisenden Elementen zusammenzusetzen und die einzelnen Elemente an ihrem Umfang mit geeigneten
Koppelelementen/zu versehen, die entsprechend den Koppelelementen 16 bis 20 oder auch anders ausgebildet sein können,
weil die Fügerichtung hierbei nicht bedeutsam ist. Weiterhin
ist es möglich, die Steckplatte mit Steckelementen in Form
von Aussparungen und die Standflächen der Bausteine mit Kop-
pelelementen/von erhabenen Vorsprüngen zu versehen. Ferner
könnten die Steckelemente auf den Deckflächen der Bausteine
fehlen, falls ein Aufeinanderstecken mehrerer Bausteine nicht
erforderlich ist. In diesem Fall könnten die Deckflächen
selbst als die anhand Fig. 2 beschriebenen Flächen 7 bis 10
ausgebildet sein. Weiterhin ist nicht erforderlich, den Nut/
Feder-Verbindungen eine der Höhe der Bausteine entsprechende
Länge zu geben. Je länger die Nut/Feder-Verbindungen sind,
um so größer ist allerdings die Wirkung des in Querrichtung
erwünschten Formschlusses, d.h. um so stabiler und haltbarer
ist ein aus einzelnen Bausteinen zusammengefügter Block auch
bei seiner Handhabung außerhalb der Steckplatte. Schließlich
können die Bausteine, abweichend von Fig. 3 und 4, an mehr
als einer Seitenfläche mit einem Koppelelement 17 in Form
einer Feder versehen sein. Das Vorsehen nur einer Feder erscheint jedoch ausreichend, um einerseits eine gute Stabilität bei Blockbildungen zu erreichen und andererseits Komplikationen beim Zusammenfügen oder Trennen von Blöcken zu vermeiden.

Patentanwalt
Diplom-Physiker
**Reinfried Frhr. v. Schorlemer**

D-3500 Kassel
Brüder-Grimm-Platz 4
Telefon (0561) 153 35

D 5293

Peter Haase, 3508 Melsungen

Vorrichtung zur Darstellung des Zahlenaufbaus und der Mächtigkeit von Mengen

Patentansprüche

1) Vorrichtung zur Darstellung des Zahlenaufbaus und der Mächtigkeit von Mengen, mit einer Mehrzahl von Standflächen, Seitenflächen und Deckflächen aufweisenden Bausteinen, deren Seitenflächen mit komplementären, zum seitlichen Koppeln der Bausteine bestimmten Koppelelementen versehen sind und deren Stand- und Deckflächen ggf. komplementäre, zum vertikalen Koppeln der Bausteine bestimmte Steckelemente aufweisen, und ggf. mit einer Steckplatte, die zum Aufstecken der Bausteine bestimmte, zu den Steckelementen der Standflächen der Bausteine komplementäre Steckelemente besitzt, dadurch gekennzeichnet, daß die Koppelelemente (16 bis 20) aus den Elementen von senkrecht zu den Standflächen der Bausteine (4,21 bis 25) fügbaren, parallel zu den Standflächen formschlüssigen Nut/Feder-Verbindungen bestehen.

2) Vorrichtung nach Anspruch 1, dadurch gekennzeichnet, daß wenigstens je zwei gegenüberliegende Seitenflächen der Bausteine mit Koppelelementen (16 bis 20) versehen sind und je eines dieser Koppelelemente aus einer Nut bzw. Feder besteht.

3) Vorrichtung nach Anspruch 1 oder 2, dadurch gekennzeichnet, daß die Steckelemente (2 bzw. 5,6) der Steckplatte und der Bausteine so ausgebildet sind, daß die Bausteine im aufgesteckten Zustand undrehbar und unverschieblich auf der Steckplatte bzw. aufeinander angeordnet sind.

4) Vorrichtung nach wenigstens einem der Ansprüche 1 bis 3, dadurch gekennzeichnet, daß alle Steckelemente (2) der Steckplatte und/oder alle auf der Deckfläche der Bausteine ausgebildeten Steckelemente (6) dieselbe Grobstruktur aufweisen.

5) Vorrichtung nach wenigstens einem der Ansprüche 1 bis 4, dadurch gekennzeichnet, daß die Steckplatte und/oder die Deckflächen der Bausteine mit unterschiedlichen Steckelementen (2,6) versehen sind.

6) Vorrichtung nach Anspruch 5, dadurch gekennzeichnet, daß die Steckelemente (2) der Steckplatte und/oder die auf den Deckflächen der Bausteine ausgebildeten Steckelemente mit Flächen (7 bis 10) unterschiedlicher Feinstruktur versehen ind.

7) Vorrichtung nach wenigstens einem der Ansprüche 1 bis 6, dadurch gekennzeichnet, daß Bausteine (4) mit dem Wert "1" und Bausteine (21,22) mit gleicher Höhe und Breite, aber einer Länge vorgesehen sind, die einem ganzzahligen Vielfachen der Länge der Bausteine (4) mit dem Wert "1" entspricht.

8) Vorrichtung nach wenigstens einem der Ansprüche 1 bis 7, dadurch gekennzeichnet, daß die Steckplatte in eine Mehrzahl von jeweils gleich viele Steckelemente umfassenden Feldern (11 und 12) aufgegliedert ist, die durch seitliche Begrenzungen (15) und/oder unterschiedliche Steckelemente abgegrenzt sind.

9) Vorrichtung nach wenigstens einem der Ansprüche 1 bis 8, dadurch gekennzeichnet, daß die Steckplatte aus einer Mehrzahl von gleich großen Plattenelementen zusammengesetzt ist.

10) Vorrichtung nach wenigstens einem der Ansprüche 1 bis 9, dadurch gekennzeichnet, daß zumindest die Steckplatte transparent ist.

Fig. 1

0118032

Fig 3

Fig 4

Fig 9

Fig 9a

Fig 5

Fig 2

0118032

Fig 6

Fig 7

Fig 8